# FASCICULE DE BREVET EUROPEEN

(11) **EP 0 991 316 B1**
(45) Date de publication et mention de la délivrance du brevet: **08.10.2003**
(21) Numéro de dépôt: 99914635.0
(22) Date de dépôt: 21.04.1999
(51) Int. Cl.: A01M 7/00

(54) **DISPOSITIF DE SUSPENSION POUR RAMPES DE PULVERISATEURS**
AUFHÄNGUNGSVORRICHTUNG FÜR SPRITZGESTÄNGE
SUSPENSION DEVICE FOR SPRAYER BOOMS

(30) Priorité: 22.04.1998 FR 9805210
(43) Date de publication de la demande: 12.04.2000
(73) Titulaire: Kuhn-Nodet S.A., 77876 Montereau (FR)
(72) Inventeur: GUESDON, Alain, F-77123 Noisy sur Ecole (FR)
(74) Mandataire: Andres, Jean-Claude
(86) Numéro de dépôt international: FR9900942
(87) Numéro de publication internationale: WO99053753

(56) Documents cités:
- EP-A- 0 572 091
- FR-A- 2 520 264
- FR-A- 2 599 941
- FR-A- 2 654 574

## Description

La présente invention se rapporte au domaine technique des appareils agricoles d'épandage portés, tractés, ou automoteurs, et plus particulièrement des appareils agricoles de pulvérisation. De tels appareils agricoles sont pourvus d'au moins une rampe destinée à épandre, le plus uniformément possible, des engrais ou des produits de traitement du type phytosanitaire sur le sol ou sur des cultures. Les dimensions relativement importantes de cette rampe imposent une construction solide et une suspension adéquate au châssis de l'appareil d'épandage porté, tracté ou automoteur.

Les dispositifs de suspension autorisent avantageusement à la rampe de se mouvoir lors de déplacements de l'appareil d'épandage sur des sols irréguliers. En outre, lesdits dispositifs de suspension doivent être capables d'incliner la rampe de manière adéquate lors d'un déplacement de l'appareil d'épandage sur un terrain en dévers.

On connaît déjà des dispositifs de suspension pendulaire pour de telles rampes. Ces dispositifs de suspension connus permettent à la rampe de conserver son parallélisme avec le sol lorsque le châssis de l'appareil d'épandage se déplace sur des irrégularités du sol. Avec un tel dispositif de suspension, la rampe est suspendue audit châssis à l'aide d'une articulation unique laquelle transmet donc, à ladite rampe, les chocs subis par le châssis.

On connaît aussi un dispositif de suspension d'une rampe d'épandage de produits de traitement phytosanitaires, qui comporte des éléments de montage de ladite rampe sur un châssis autorisant des mouvements de ladite rampe par rapport audit châssis.

Un tel dispositif de suspension est par exemple décrit dans le document **FR 2 599 941-A1.** Ce dernier divulgue en effet un dispositif de suspension comportant deux éléments symétriques dont chacun comprend :
- une biellette liée, par l'une de ses extrémités, de manière pivotante par rapport à un cadre fixe supporté par un engin porteur,
- un palonnier coudé dont le sommet est monté basculant par rapport à la rampe, tandis que l'extrémité de sa branche orientée vers le centre est articulée à la seconde extrémité de la biellette, et
- un ressort de traction dont les bouts sont accrochés respectivement à la biellette et à l'extrémité de la seconde branche du palonnier tournée vers l'extérieur.

Un tel dispositif de suspension présente des inconvénients. Il semble en effet que des moyens pour amortir les mouvements de la rampe ne soient pas intégrés dans ledit dispositif de suspension. En outre, il semble impossible d'agir sur la géométrie du dispositif de suspension et, par conséquent, sur le comportement dynamique de la rampe.

Le document **FR-A-2 520 264** décrit un autre dispositif de suspension muni cette fois d'amortisseurs permettant d'atténuer, dans certaines conditions, les mouvements de roulis de ladite rampe.

L'objet de la présente invention vise donc à remédier aux inconvénients de l'état de la technique en réalisant un dispositif de suspension apte à amortir, de préférence rapidement, les diverses oscillations auxquelles est soumise la rampe durant les déplacements de l'appareil et dont la sensibilité vis-à-vis de l'amortissement peut être choisie en fonction de diverses conditions d'utilisation.

L'objet assigné à la présente invention est atteint à l'aide d'un dispositif de suspension d'une rampe comportant les caractéristiques figurant dans la partie caractérisante de la revendication 1.

Grâce à un tel dispositif de suspension, il est possible d'influencer la réaction dynamique de la rampe. Ledit dispositif de suspension de la rampe pourra en effet, au choix de l'utilisateur, fonctionner de manière comparable à un système pendulaire classique ou à un système à bielles. En fonction des conditions d'utilisation rencontrées, l'un ou l'autre mode de fonctionnement ou une combinaison des deux modes de fonctionnement pourront être sélectionnés.

Un objet supplémentaire de l'invention vise à réaliser un dispositif de suspension de la rampe, qui permet en sus de procéder à un réglage du dévers de la rampe.

D'autres caractéristiques et avantages de l'invention ressortiront de la description détaillée figurant ci-après et faite en référence aux dessins annexés donnés à titre d'exemples non limitatifs et dans lesquels :
- la **figure 1a** représente une vue partielle d'une rampe de pulvérisation montée sur un châssis à l'aide d'un premier exemple de réalisation d'un dispositif de suspension conforme à l'invention ;
- les **figures 1b et 1c** représentent la rampe de la figure 1a dans des conditions d'utilisation différentes ;
- la **figure 1d** représente la rampe des figures 1a, 1b et 1c lors d'un déplacement en dévers sur un terrain en pente ;
- la **figure 2** représente un deuxième exemple de réalisation d'un dispositif de suspension conforme à l'invention ;
- les **figures 3 et 4** représentent des vues plus étendues d'un appareil de pulvérisation dans des conditions d'utilisation différentes, dont la rampe de pulvérisation est suspendue au châssis à l'aide du premier exemple de réalisation du dispositif de suspension conforme à l'invention ;
- la **figure 5** représente un exemple de réalisation d'un mécanisme de blocage du dispositif de suspension conforme à l'invention.

Dans la suite de la description, les références mentionnées sur les figures, sont augmentées ou diminuées d'un multiple de 100 lorsque l'on passe d'un exemple de réalisation à un autre, pour les éléments ayant subi une modification structurelle et/ou fonctionnelle. Ces éléments conservent cependant la même dénomination. Les références des autres éléments demeurent inchangées.

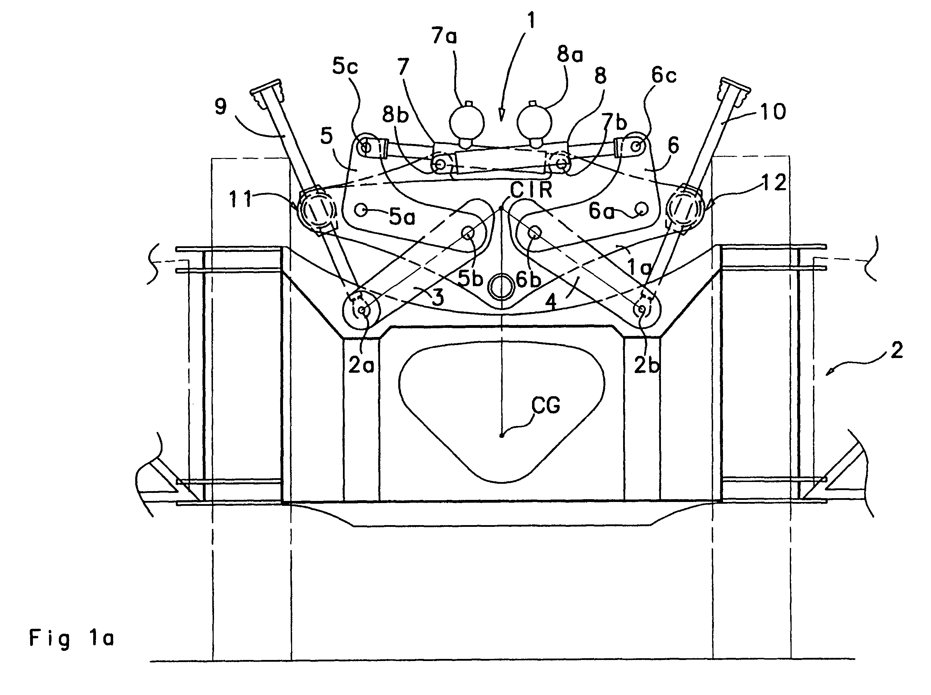

La figure 1a représente un premier exemple de réalisation d'un dispositif de suspension (1) conforme à l'invention. Le dispositif de suspension (1) permet de suspendre et d'orienter une rampe (2) de pulvérisation, ladite rampe (2) n'étant montrée que partiellement sur cette figure. La rampe (2) est suspendue à un châssis (1a) d'un pulvérisateur porté, tracté ou automoteur. Le dispositif de suspension (1) autorise un déplacement contrôlé de la rampe (2) par rapport au châssis (1a) et notamment autour d'un centre instantané de rotation (CIR). La rampe (2) présente un centre de gravité (CG).

Le dispositif de suspension (1) comprend tout d'abord des éléments de montage réalisant la liaison entre le châssis (1a) et la rampe (2). Avantageusement, les éléments de montage comprennent deux bielles (3, 4), articulées chacune sur la rampe (2) en un point d'articulation (2a, 2b) et dont la convergence vers le haut détermine la localisation du centre instantané de rotation (CIR). Les éléments de montage comprennent également deux basculeurs (5, 6) présentant chacun avantageusement une forme sensiblement coudée et étant chacun articulé sur le châssis (1a) en un point d'articulation (5a, 6a) correspondant - sensiblement central - réalisant le point de pivotement dudit basculeur (5, 6). L'une des extrémités de chaque basculeur (5, 6) - dans l'exemple représenté, celle qui est orientée vers le centre du dispositif de suspension (1a) - est articulée sur l'une correspondante des bielles (3, 4) en un point d'articulation (5b, 6b), et l'autre extrémité de chaque basculeur (5, 6) est liée au châssis (1a) par l'intermédiaire d'un organe de réglage (7, 8). Chaque basculeur (5, 6) est lié à l'organe de réglage (7, 8) respectif au moyen d'une articulation (5c, 6c) correspondante.

Le dispositif de suspension (1) comporte, de préférence, deux tels organes de réglage (7, 8) articulés sur le châssis (1a) respectivement en des points d'articulation (7b, 8b). Dans l'exemple de réalisation représenté, les points d'articulation (7b, 8b) sont distincts l'un de l'autre. Dans un autre exemple de réalisation, lesdits organes de réglage (7, 8) pourraient cependant être articulés sur la même articulation (7b, 8b) du châssis (1a). Ces organes de réglage (7, 8) sont avantageusement constitués de vérins hydrauliques. Ces derniers permettent de modifier l'orientation angulaire des bielles (3, 4) via une action sur les basculeurs (5, 6). Cette modification angulaire de l'orientation des bielles (3, 4) correspond en fait à une modification de la convergence desdites bielles (3, 4) et, par conséquent, à une modification de l'écartement entre le centre de gravité (CG) de la rampe (2) et le centre instantané de rotation (CIR) de celle-ci. On peut ainsi agir sur la sensibilité du dispositif de suspension (1) et, par conséquent, sur la réaction dynamique de la rampe (2).

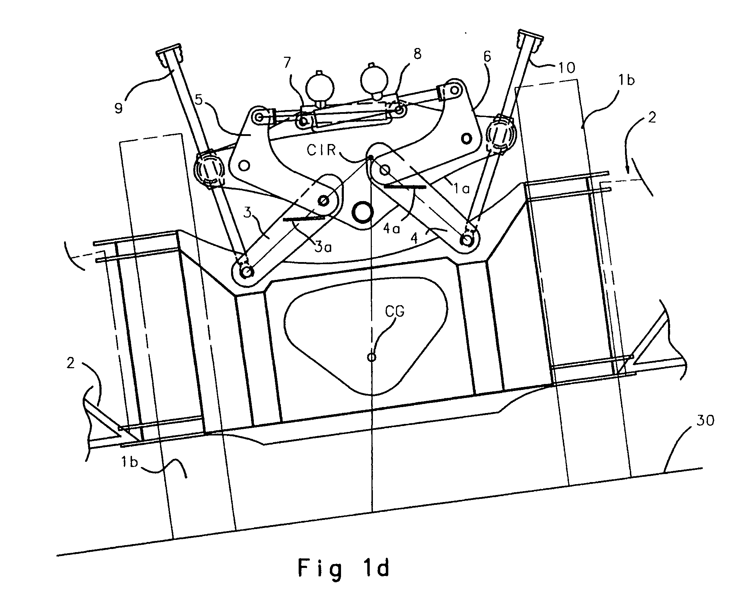

Les organes de réglage (7, 8) sont également aptes à commander une orientation angulaire donnée de la rampe (2) vis-à-vis du châssis (1a) et ce, afin d'assurer le parallélisme de ladite rampe (2) avec le sol (30) (figure 1c ou 1d par exemple). Une extension différente de l'un des organes de réglage (7, 8) par rapport à l'autre permet ainsi d'agir sur l'orientation de la rampe (2). L'extension de chaque organe de réglage (7, 8) est déterminée ici par une course donnée du piston du vérin hydraulique constituant ledit organe de réglage (7, 8).

Lesdits vérins hydrauliques sont en outre réalisés sous forme de vérins oléopneumatiques. A cet effet, ceux-ci présentent chacun un accumulateur hydropneumatique (7a, 8a). De cette sorte, lesdits vérins oléopneumatiques constituent des moyens élastiquement déformables permettant aux basculeurs (5, 6) de se déplacer, par pivotement, à l'encontre d'une force de rappel générée par lesdits vérins oléopneumatiques. Cette force de rappel favorise le retour de la rampe (2) à sa position normale.

Lesdits vérins oléopneumatiques constituent également des moyens pour amortir les mouvements brusques transmis à la rampe (2) par l'intermédiaire du châssis (1a).

Dans l'exemple de réalisation représenté, les moyens élastiquement déformables et les moyens amortisseurs sont intégrés dans les organes de réglage (7, 8). D'autres réalisations peuvent cependant être envisagées sans pour autant sortir du cadre de la présente invention.

Dans l'invention, les accumulateurs hydropneumatiques (7a, 8a) pourraient également être directement intégrés dans la structure même des vérins hydrauliques.

Les figures 1a à 1d, 3 et 4 montrent également des tiges (9, 10) implantées entre le châssis (1a) et la rampe (2). Dans l'exemple de réalisation représenté, lesdites tiges (9, 10) sont reliées respectivement aux articulations (2a, 2b) des bielles (3, 4) sur la rampe (2). Les tiges coulissantes (9, 10) font partie de mécanismes de blocage (11, 12) solidaires du châssis (1a) de manière à pouvoir bloquer la rampe (2) dans une position angulaire déterminée par rapport audit châssis (1a).

Chaque mécanisme de blocage (11, 12) est, par exemple, constitué d'un vérin susceptible d'interdire tout mouvement de coulissement de la tige (9, 10) après une orientation voulue de la rampe (2).

Un réglage automatique de l'orientation de la rampe (2) peut également être prévu. Dans ce cas, les moyens de blocage (11, 12) et les organes de réglage (7, 8) sont alors actionnés en fonction d'informations issues de capteurs. Des moyens électroniques associés éventuellement à une gestion par ordinateur, peuvent être utilisés pour piloter les mécanismes de blocage (11, 12) et les organes de réglage (7, 8). D'autres moyens connus dans le domaine de la mécanique et de l'électronique peuvent également compléter les mécanismes de blocage (11, 12) et les organes de réglage (7, 8) pour orienter convenablement la rampe (2), à savoir des capteurs optiques ou de mouvement, d'effort ou d'accélération.

Les mécanismes de blocage (11, 12) avec leurs tiges (9, 10) permettent ainsi de bloquer la rampe (2), en particulier lorsque seulement la moitié de la rampe (2) est dépliée. Dans ce cas, la répartition asymétrique du poids de la rampe (2) nécessite en effet que l'on bloque ladite rampe (2).

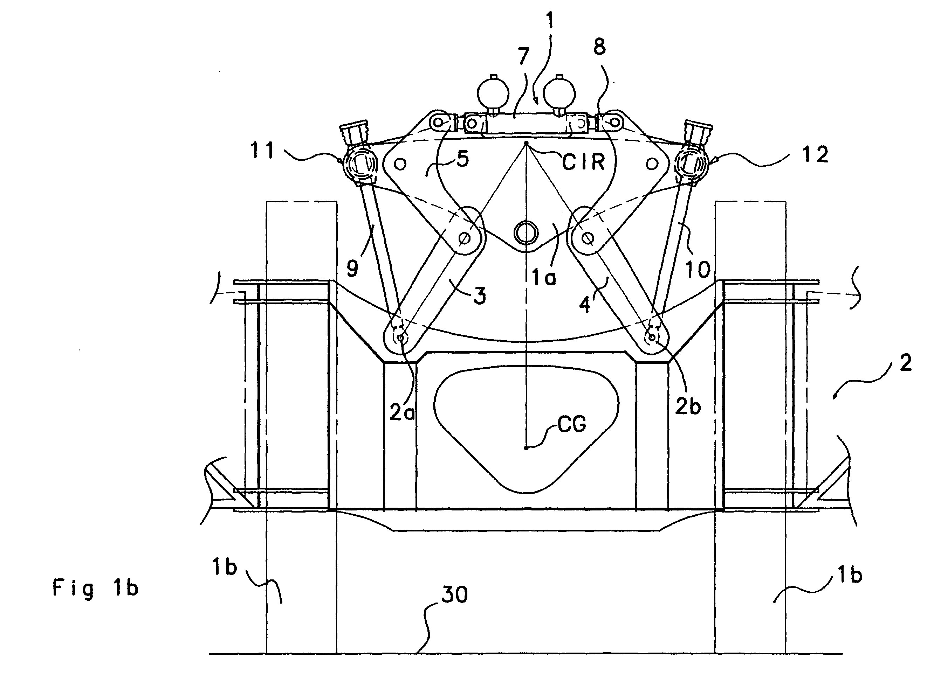

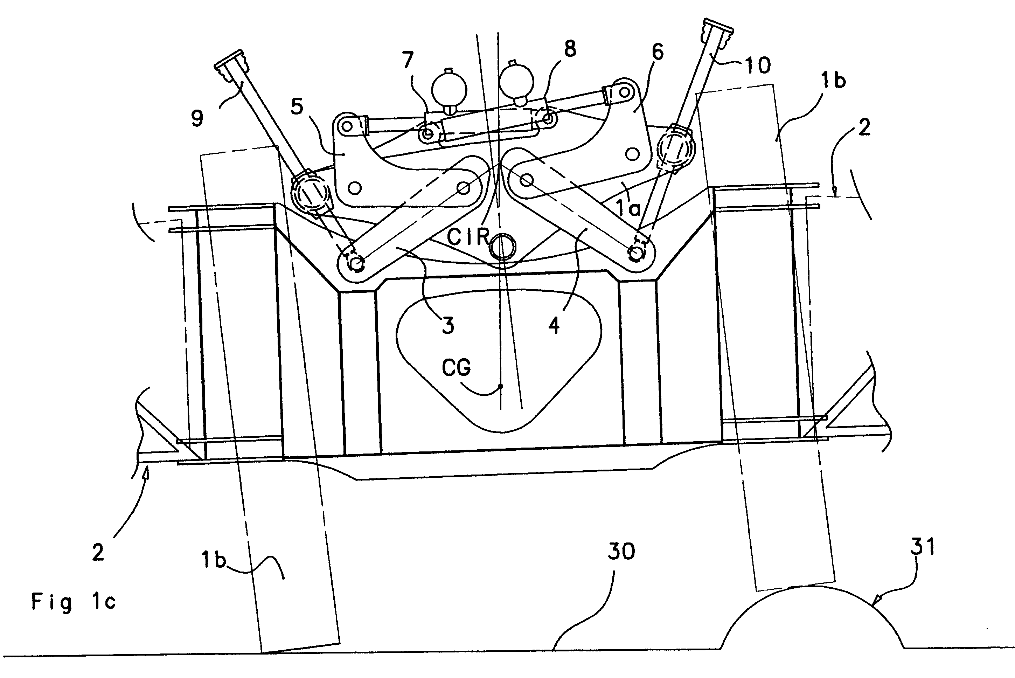

La figure 1b représente la rampe (2) et son dispositif de suspension (1) dans la position d'écartement maximal entre le centre de gravité (CG) de la rampe (2) et le centre instantané de rotation (CIR) de celle-ci. Dans cette position, les organes de réglage (7, 8) présentent une longueur minimale correspondant à un raccourcissement maximal des vérins oléopneumatiques. Ce raccourcissement desdits vérins entraîne le pivotement des basculeurs (5, 6), lequel pivotement provoque un écartement entre le centre instantané de rotation (CIR) de la rampe (2) et le centre de gravité (CG) de celle-ci. Une remontée de la rampe (2) consécutive à un choc vertical, provoque une traction sur les organes de réglage (7, 8) exercée par les basculeurs (5, 6). L'utilisation de vérins oléopneumatiques permet d'amortir de tels mouvements brusques.

Un éloignement ou écartement du centre instantané de rotation (CIR) de la rampe (2) du centre de gravité (CG) de celle-ci, augmente, dans un régime dynamique, le moment de rappel appliqué à la rampe (2) en mouvement, de manière à diminuer la force nécessaire pour ramener ladite rampe (2) dans sa position normale. La stabilité de la position de la rampe (2) se trouve ainsi augmentée.

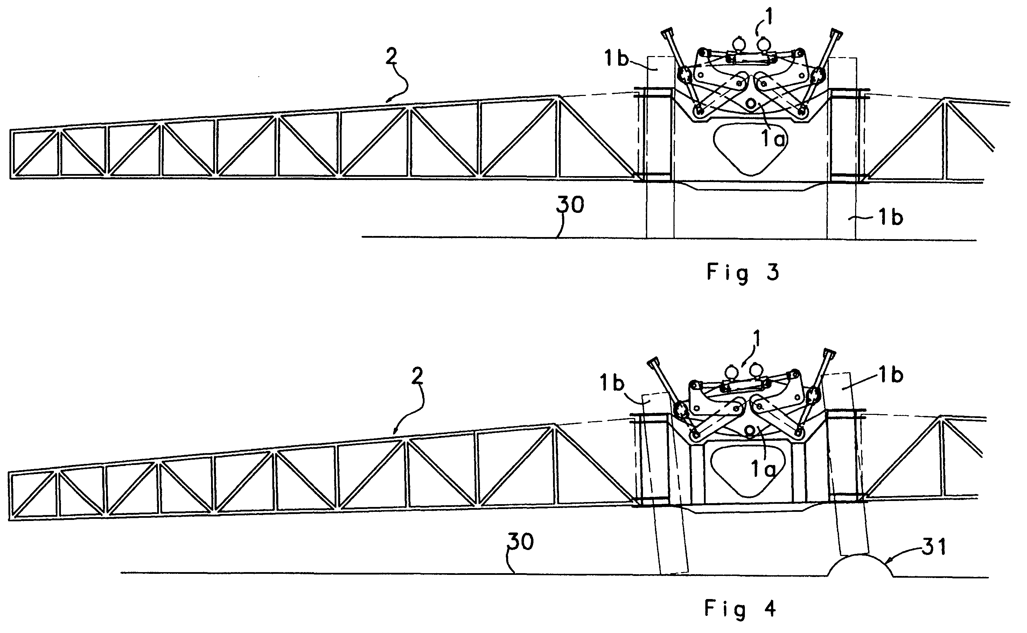

Sur les figures 1a, 1b et 3, on voit que le dispositif de suspension (1) de la rampe (2) est sensiblement symétrique par rapport à un plan vertical dirigé dans la direction d'avance durant le travail et contenant le centre instantané de rotation (CIR) de la rampe (2) et le centre de gravité (CG) de celle-ci.

Les figures 1c et 4 schématisent le comportement de la rampe (2) et de son dispositif de suspension (1) lorsque l'une des roues (1b) du véhicule tracteur portant le pulvérisateur ou du pulvérisateur automoteur ou encore du pulvérisateur traîné roule sur une irrégularité (31) du sol (30). Le châssis (1a) subit alors une brusque accélération verticale, laquelle est amortie par le dispositif de suspension (1). Ce dernier permet en outre à la rampe (2) de rester sensiblement parallèle au sol (30) indépendamment d'une inclinaison momentanée du châssis (1a) du pulvérisateur.

L'inclinaison se traduit par une rupture de symétrie entre le sous-ensemble constitué par la bielle (3), le basculeur (5) et l'organe de réglage (7) et le sous-ensemble constitué par la bielle (4), le basculeur (6) et l'organe de réglage (8).

L'un ou l'autre des organes de réglage (7, 8) est plus ou moins allongé ou raccourci, en fonction de l'importance de l'inclinaison du châssis (1a). On observe, par conséquent, qu'avec le dispositif de suspension (1) conforme à l'invention, le comportement est analogue à celui d'un système pendulaire, sans pour autant transmettre des chocs ou secousses à la rampe (2).

La figure 1d représente le pulvérisateur se déplaçant sur un sol (30) incliné (ou en dévers). Grâce au dispositif de suspension (1) conforme à l'invention, il est possible de maintenir le parallélisme entre ledit sol (30) et la rampe (2). Ceci est obtenu à l'aide d'une extension différente de chaque organe de réglage (7, 8).

La droite fictive passant par le centre de gravité (CG) de la rampe (2) et le centre instantané de rotation (CIR) de celle-ci reste sensiblement orthogonale à l'horizontale malgré l'inclinaison de la rampe (2) par rapport à l'horizontale. En outre, le dispositif de suspension (1) est toujours en mesure d'amortir et d'absorber les chocs latéraux et verticaux subis par la rampe (2).

Alors que dans cet exemple de réalisation, le dispositif de suspension (1) est pourvu de mécanismes de blocage (11, 12) à tiges (9, 10), il est parfaitement possible, dans le cadre de l'invention, qu'à la place de ceux-ci ou en combinaison avec ceux-ci, chaque bielle (3, 4) (ou chaque basculeur (5, 6)) soit pourvue d'une butée mécanique (3a, 4a) contre laquelle le basculeur (5, 6) correspondant (ou la bielle (3, 4) correspondante) peut venir en appui lorsque l'organe de réglage (7, 8) respectif est allongé d'une certaine valeur (cette butée mécanique limite l'angle entre la bielle (3, 4) et le basculeur (5, 6) correspondant). Cela permet de bloquer la rampe (2) sur le châssis (1a), par exemple pour des travaux spéciaux ou pour des déplacements sur route. Il est ainsi possible de supprimer tout mouvement relatif entre la rampe (2) et le châssis (1a), car les vérins oléopneumatiques constitutifs des organes de réglage (7, 8), restent, en extension maximale, sous pression. Ces butées mécaniques (3a, 4a) constituent un exemple de réalisation de mécanismes de limitation permettant de bloquer la rampe (2) dans une position haute.

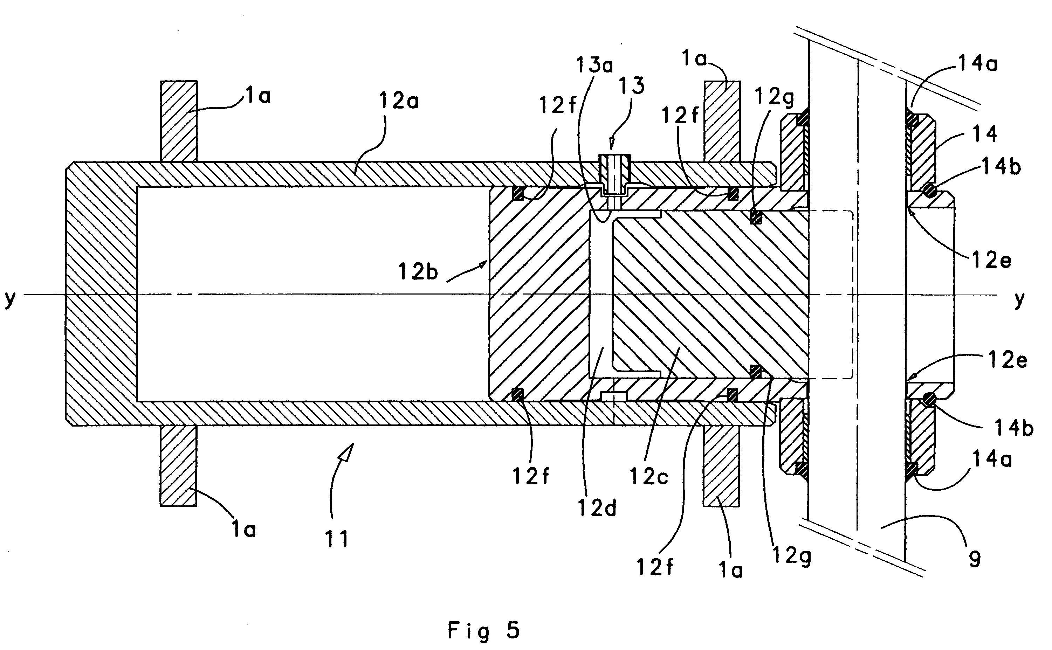

La figure 5 représente en détail le mécanisme de blocage (11). Ce dernier comporte une structure porteuse (12a), par exemple cylindrique, fixée sur le châssis (1a).

Cette structure porteuse (12a) contient un vérin hydraulique (12b). Ce dernier est fixé dans la structure porteuse (12a) et son piston (12c) est susceptible de bloquer la tige (9) par friction. L'extrémité du piston (12c), venant en appui contre la tige (9), présente, à cet effet, une forme complémentaire de celle de ladite tige (9), par exemple une forme arrondie ou en V. Les éléments de la figure 5, à l'exception de la tige (9), sont représentés en coupe. Le vérin hydraulique (12b) est pourvu d'une chambre (12d) dans laquelle se déplace le piston (12c). Avantageusement, la tige (9) traverse un alésage (12e) ménagée dans le cylindre constitutif du vérin (12b) de manière à autoriser un coulissement de ladite tige (9) lorsque le vérin (12b) n'est pas sous pression.

Le vérin (12b) est, de préférence, monté à l'intérieur de la structure porteuse (12a) à l'aide d'un organe de positionnement et d'alimentation en huile (13), des joints d'étanchéité statiques (12f) assurant l'étanchéité entre la structure porteuse (12a) et l'extérieur du cylindre dudit vérin (12b). Ledit cylindre, quant à lui, est pourvu d'une ouverture (13a) et d'une gorge s'étendant sur une partie au moins de la périphérie dudit cylindre de manière à conserver la communication entre la chambre (12d) et l'organe de positionnement et d'alimentation en huile (13) lors d'une éventuelle rotation dudit cylindre dans la structure porteuse (12a). Le piston (12c) est également avantageusement pourvu d'un joint d'étanchéité (12g) et est libre en rotation dans la chambre (12d) de manière à permettre à l'extrémité du piston (12c) de s'adapter parfaitement à la tige (9).

Le vérin (12b) est également associé à une pièce (14) de guidage de la tige (9) pourvue de joints (14a) réalisant l'étanchéité avec la tige (9) laquelle coulisse dans ladite pièce de guidage (14). Celle-ci est par ailleurs montée sur le cylindre du vérin (12b) de manière à être positionnée entre un épaulement du cylindre du vérin (12b) et un anneau élastique (14b) monté sur l'extrémité libre dudit cylindre du vérin (12b). Ainsi, lorsque la chambre (12d) du vérin (12b) est sous pression, la pièce de guidage (14) est en appui contre l'anneau élastique (14b) sous l'effet de la pression exercée par le piston (12c) sur la tige (9). Par contre, lorsque la pression à l'intérieur de la chambre (12d) du vérin (12b) chute, le piston (12c) n'est plus en appui sur la tige (9). Cette dernière est alors libérée et est, de ce fait, susceptible de coulisser à l'intérieur de la pièce de guidage (14).

Alors que l'on vient de décrire en détail le mécanisme de blocage (11), on comprendra que le mécanisme de blocage(12) est tout à fait similaire de sorte qu'il ne sera pas décrit ici.

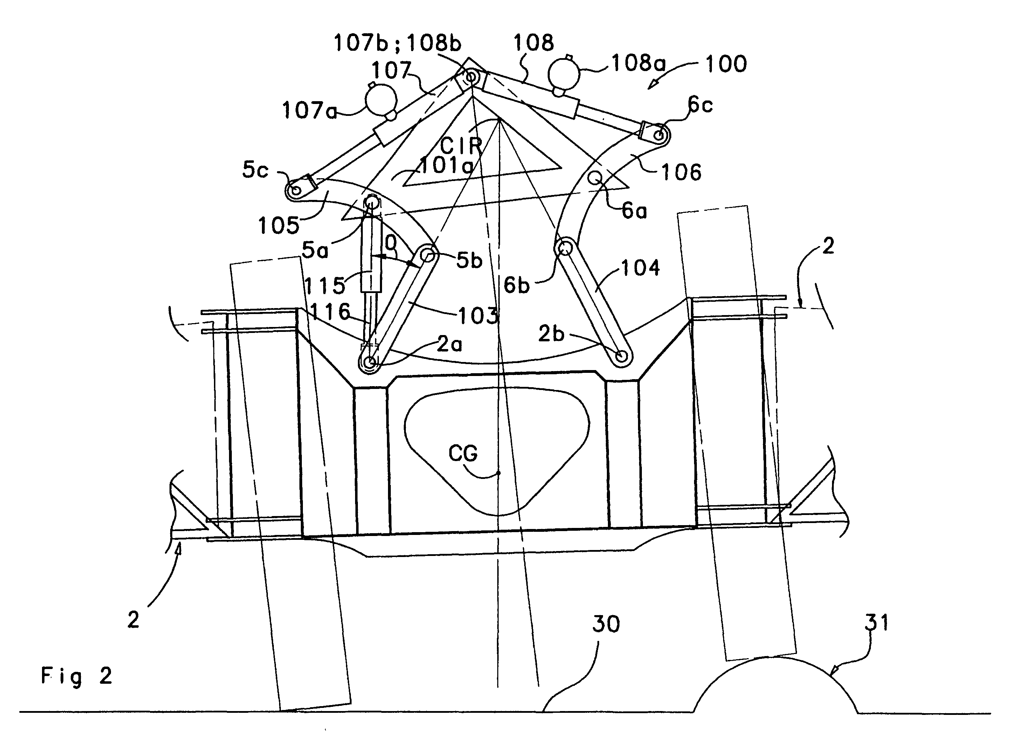

La figure 2 montre un autre exemple de réalisation d'un dispositif de suspension (100). Dans celui-ci, les organes de réglage (107, 108) sont par exemple articulés en un même point d'articulation. A cet effet, les articulations (107b, 108b) sont, par exemple, confondues.

Dans cet exemple de réalisation, on verra, en outre, que les moyens pour amortir les mouvements de la rampe (2) comprennent, en sus, au moins un amortisseur hydraulique (115) supplémentaire monté entre le châssis (101a) et ladite rampe (2). Ledit amortisseur hydraulique (115) est orienté angulairement par rapport à l'une (103) des bielles (103, 104). De préférence, l'amortisseur hydraulique (115) est monté entre l'articulation (2a) liant ladite bielle (103) à la rampe (2) et l'articulation (5a) liant le basculeur (105) correspondant au châssis (101a). L'amortisseur hydraulique (115) comporte un piston (116) lié à la rampe (2) et dont la course est amortie. L'amortisseur hydraulique (115) est, par exemple, constitué d'un vérin hydraulique comportant un système interne d'amortissement. Ce dernier permet de définir un degré d'amortissement dépendant de la course dudit piston (116).

Le montage de l'amortisseur hydraulique (115) permet de définir un angle (O) avec la bielle correspondante (103). L'angle (O) est alors représentatif de la course du piston (116) et augmente avec un raccourcissement de l'amortisseur hydraulique (115). A l'inverse, une diminution de l'angle (O) correspond à un allongement de l'amortisseur hydraulique (115). Ainsi, un mouvement vertical de la rampe (2) d'une amplitude donnée présentera un amortissement avec un degré déterminé par la valeur de l'angle (O). A titre d'exemple préférentiel, l'amortisseur hydraulique (115) fournit un amortissement d'autant plus élevé que l'angle (O) augmente. L'angle (O) entre l'amortisseur hydraulique (115) et la bielle (103) correspondante reflète donc le comportement dynamique donné de la rampe (2).

Avec une valeur faible de l'angle (O), l'amortissement de la rampe (2) est diminué. En revanche, le centre instantané de rotation (CIR) de la rampe (2) est plus éloigné du centre de gravité (CG) de celle-ci, ce qui réduit l'instabilité de l'effet balancier de ladite rampe (2).

Ainsi, l'utilisateur confronté à un sol (30) irrégulier susceptible de transmettre des chocs à la rampe (2) via le châssis (1a), favorisera un réglage avec un angle (O) important ou, en d'autres termes, avec un écartement réduit entre le centre de gravité (CG) de la rampe (2) et le centre instantané (CIR) de celle-ci.

En cas d'absence d'irrégularités (31), l'utilisateur aura, par contre, plutôt intérêt à favoriser un réglage avec un angle (O) faible ou, en d'autres termes, avec un écartement important entre le centre de gravité (CG) de la rampe (2) et le centre instantané (CIR) de celle-ci. En effet, l'écartement plus important entre le centre de gravité (CG) de la rampe (2) et le centre instantané de rotation (CIR) de celle-ci augmente, dans un régime dynamique, le moment de rappel appliqué à la rampe (2), de manière à diminuer la force nécessaire pour ramener ladite rampe (2) dans sa position normale. Un tel réglage peut notamment convenir pour un terrain vallonné dépourvu d'irrégularités.

Avantageusement, le dispositif de suspension (100) peut également comporter des mécanismes de blocage de la rampe (2), par exemple similaires aux mécanismes de blocage (11, 12), lesquels peuvent être activés ou non.

On comprendra que l'amortisseur hydraulique (115) pourrait également être monté entre l'articulation (2b) liant la bielle (104) à la rampe (2) et l'articulation (6a) liant le basculeur (106) correspondant au châssis (101a). Il serait également parfaitement envisageable d'associer un amortisseur hydraulique (115) à chaque bielle (103, 104).

Le dispositif de suspension (1 ; 100) conforme à l'invention présente un certain nombre d'avantages.

En effet, le comportement dynamique de la rampe (2) peut être influencé par l'utilisateur en agissant sur l'écartement statique entre le centre de gravité (CG) de ladite rampe (2) et le centre instantané de rotation (CIR) de celle-ci. Ceci est obtenu en agissant sur l'angle entre les deux bielles (3, 4 ; 103, 104) défini par les génératrices fictives passant respectivement par les centres des articulations (2a, 5b) et (2b, 6b). Dans l'exemple de réalisation de la figure 2, agir sur l'angle entre les deux bielles (103, 104) est équivalant à agir sur l'angle (O).

Ainsi, avec une diminution de l'angle entre les deux bielles (3, 4 ; 103, 104), on augmente le moment de rappel auquel est soumise la rampe (2), ce qui a pour conséquence d'augmenter la stabilité de la rampe (2) vis-à-vis des accélérations latérales et de réduire le phénomène de roulis. Le maintien du parallélisme de la rampe (2) par rapport au sol (30) est également amélioré, ce qui favorise un bon comportement en dévers. La rampe (2) est, dans ce cas par contre, plus sensible aux accélérations verticales générées par des irrégularités (31) du sol (30). Les organes de réglage (7, 8 ; 107, 108) et/ou l'(les) éventuel(s) amortisseur(s) hydraulique(s) (115) sont cependant aptes à amortir, de façon satisfaisante, lesdites accélérations. Un tel réglage convient, par exemple, pour des terrains inclinés ou vallonnés, avec peu ou pas d'irrégularités (31).

L'augmentation de l'angle entre les deux bielles (3, 4 ; 103, 104) diminue par contre le moment de rappel auquel est soumise la rampe (2) et rend, par conséquent, la rampe (2) plus sensible au phénomène de roulis ou à l'inclinaison du sol (30). Le maintien du parallélisme de la rampe (2) par rapport au sol (30) n'est plus assuré avec la même efficacité qu'avec un angle faible. En revanche, les accélérations verticales sont davantage absorbées et le comportement, du type pendulaire, du dispositif de suspension (1 ; 100) est favorisé. La rampe (2) a, dans cet exemple de réglage, plutôt tendance à conserver une position horizontale. Ceci est donc particulièrement avantageux pour un terrain sensiblement plat et éventuellement bosselé.

L'amortissement est donc variable en fonction de la convergence des bielles (3, 4 ; 103, 104) et, par conséquent, de la position du centre instantané de rotation (CIR) de la rampe (2) par rapport au centre de gravité (CG) de celle-ci. L'avantage du dispositif de suspension (1 ; 100) conforme à l'invention réside notamment dans la possibilité de choisir, dans un régime statique (pulvérisateur à l'arrêt), ladite position du centre instantané de rotation (CIR), celle-ci conditionnant alors le comportement dynamique de la rampe (2) lors des opérations de pulvérisation.

Ainsi, en fonction de la prédominance de certaines caractéristiques du terrain ou du sol (30) sur lequel doit travailler le pulvérisateur, l'utilisateur est en mesure de sélectionner un comportement dynamique donné de la rampe (2).

Il est également possible de tenir compte des vitesses d'avancement, certaines d'entre elles étant susceptibles d'accentuer les accélérations ou les chocs subis par la rampe (2).

Le comportement de la rampe (2) pourrait également être avantageusement piloté par un ordinateur dans lequel on aura, au préalable, mémorisé les caractéristiques du terrain sur lequel est appelé à se déplacer le pulvérisateur.

L'utilisation de vérins oléopneumatiques permet aussi d'atténuer, de manière particulièrement efficace, les accélérations, notamment verticales, consécutivement à un choc ou à un mouvement brusque de la rampe (2).

Le dispositif de suspension (1 ; 100) conforme à l'invention permet donc d'obtenir un amortissement optimal et efficace.

Il présente en outre l'avantage que son comportement dynamique se rapproche du comportement d'une suspension pendulaire classique ou d'une suspension à bielles, et ceci selon le réglage, en statique, du positionnement du centre instantané de rotation (CIR) de la rampe (2) par rapport au centre de gravité (CG) de celle-ci.

Les basculeurs (5, 6 ; 105, 106) sont associés à des moyens élastiquement déformables dont la force de rappel favorise un retour rapide de la rampe (2) à une position normale. Les moyens élastiquement déformables sont constitués par les organes de réglage (7, 8 ; 107, 108) du type vérin à accumulateur (7a, 8a ; 107a, 108a).

Le dispositif de suspension conforme à l'invention est donc particulièrement intéressant dans la mesure où il permet de réduire le phénomène de roulis de la rampe (2) lors de déplacements sur champs.

Dans les divers exemples de réalisation qui viennent d'être décrits, les deux bielles (3, 4 ; 103, 104) sont articulées chacune sur la rampe (2), tandis que les deux basculeurs (5, 6 ; 105, 106) sont articulés chacun sur le châssis (1a; 101a) et sont en sus liés à celui-ci par l'intermédiaire des organes de réglage (7, 8 ; 107, 108). On comprendra cependant que, dans l'invention, les deux bielles (3, 4 : 103, 104) pourraient également être articulées chacune sur le châssis (1a ; 101a). Dans ce cas, les deux basculeurs (5, 6 ; 105, 106) seraient articulés sur la rampe (2) et seraient en sus liés à celle-ci par l'intermédiaire des organes de réglage (7, 8 ; 107, 108).

Les divers exemples de réalisation qui viennent d'être décrits, se rapportent tous à un pulvérisateur de produits de traitement du type phytosanitaire. On comprendra cependant que l'invention concerne également tous types d'appareils agricoles capables d'épandre des produits, tels que les épandeurs d'engrais par exemple.

Diverses modifications peuvent également être apportées aux exemples de réalisation décrits, notamment en ce qui concerne l'assemblage, l'association ou la combinaison de différents éléments ou le remplacement de ces derniers par des éléments équivalents, sans pour autant sortir du cadre de la présente invention. On pourra en particulier transposer des organes de l'un des exemples de réalisation sur un autre.

## Revendications

1. Dispositif de suspension (1 ; 100) d'une rampe (2) d'un appareil agricole d'épandage de produits, ledit dispositif comportant des éléments de montage de ladite rampe (2) sur un châssis (1a ; 101a) dudit appareil et des moyens (7, 8 ; 107, 108, 115) pour amortir certains mouvements de la rampe (2), les éléments de montage comprenant deux bielles (3, 4 ; 103, 104) articulées chacune sur la rampe (2) ou sur le châssis (1a, 101a) en un point d'articulation respectif (2a, 2b) et dont la convergence détermine la localisation géométrique du centre instantané de rotation (CIR) de ladite rampe (2), ***caractérisé en ce que*** :
- ledit dispositif de suspension (1 ; 100) comporte en sus des organes de réglage (7, 8 ; 107, 108) susceptibles d'agir sur les éléments de montage de ladite rampe (2) de manière à faire varier la position du centre instantané de rotation (CIR) de ladite rampe (2) par rapport au centre de gravité (CG) de celle-ci en modifiant l'écartement entre ledit centre de gravité (CG) et ledit centre instantané de rotation (CIR) qui se situe plus haut que ledit centre de gravité (CG),
- les éléments de montage comprennent en sus deux basculeurs (5, 6 ; 105, 106) articulés chacun sur le châssis (1a ; 101a) ou sur la rampe (2) en un point d'articulation respectif (5a, 6a), l'une des extrémités de chaque basculeur (5, 6 ; 105, 106) étant articulée sur l'une correspondante des bielles (3, 4 ; 103, 104) en un point d'articulation (5b, 6b), tandis que l'autre extrémité de chaque basculeur (5, 6 ; 105, 106) est liée au châssis (1a ; 101a) ou à la rampe (2) par l'intermédiaire de l'organe de réglage (7, 8 ; 107, 108) correspondant.

2. Dispositif de suspension selon la revendication 1, ***caractérisé en ce* que** les organes de réglage (7, 8 ; 107, 108) sont également aptes à commander une orientation angulaire donnée de la rampe (2) par rapport au châssis (1a ; 101a), et ce, afin d'assurer au moins sensiblement le parallélisme de ladite rampe (2) avec un sol (30) incliné par rapport à l'horizontale.

3. Dispositif de suspension selon la revendication 1 ou 2, ***caractérisé en ce* que** les deux bielles (3, 4 ; 103, 104) convergent vers le haut.

4. Dispositif de suspension selon l'une quelconque des revendications 1 à 3, ***caractérisé en ce* que** chaque basculeur (5, 6 ; 105, 106) est articulé sur le châssis (1a ; 101a) ou sur la rampe (2) en un point d'articulation respectif (Sa, 6a) sensiblement central.

5. Dispositif de suspension selon l'une quelconque des revendications 1 à 4, ***caractérisé en ce* que** chaque basculeur (5, 6 ; 105, 106) présente une forme sensiblement coudée.

6. Dispositif de suspension selon l'une quelconque des revendications 1 à 5, ***caractérisé en ce* qu'**il comporte en sus des moyens élastiquement déformables dont la force de rappel favorise un retour de la rampe (2) à une position normale.

7. Dispositif de suspension selon la revendication 6, ***caractérisé en ce* que** les moyens élastiquement déformables sont constitués par les organes de réglage (7, 8 ; 107, 108).

8. Dispositif de suspension selon l'une quelconque des revendications 1 à 7, ***caractérisé en ce* que** les moyens (7, 8 ; 107, 108, 115) pour amortir les mouvements de la rampe (2) sont constitués, en partie au moins, par les organes de réglage (7, 8 ; 107, 108).

9. Dispositif de suspension selon l'une quelconque des revendications 1 à 8, ***caractérisé en ce* que** chaque organe de réglage (7, 8 ; 107, 108) est constitué d'un vérin oléopneumatique.

10. Dispositif de suspension selon l'une quelconque des revendications 1 à 9, ***caractérisé en ce* que** les moyens pour amortir les mouvements de la rampe (2) comprennent au moins un amortisseur hydraulique (115) monté entre le châssis (101a) et la rampe (2).

11. Dispositif de suspension selon la revendication 10, ***caractérisé en ce* que** ledit amortisseur hydraulique (115) est monté entre le point d'articulation (2a, 2b) liant l'une des bielles (103, 104) à la rampe (2) ou au châssis (101a) et le point d'articulation (5a, 6a) liant le basculeur (105, 106) correspondant au châssis (101a) ou à la rampe (2).

12. Dispositif de suspension selon l'une quelconque des revendications 1 à 11, ***caractérisé en ce* qu'**il comporte en sus des mécanismes de blocage (11, 12) permettant de bloquer la rampe (2) dans une position quelconque.

13. Dispositif de suspension selon l'une quelconque des revendications 1 à 12, ***caractérisé en ce* qu'**il est comporte en sus des mécanismes de limitation permettant de bloquer la rampe (2) dans une position haute.

14. Appareil agricole d'épandage de produits pourvu d'un châssis (la ; 101a), d'une rampe (2) d'épandage desdits produits et d'un dispositif de suspension (1 ; 100) pour suspendre ladite rampe d'épandage (2) sur ledit châssis (1a ; 101a), ***caractérisé en ce* que** ledit dispositif de suspension (1 ; 100) est un dispositif de suspension conforme à l'une quelconque des revendications 1 à 13.

## Patentansprüche

1. Aufhängungsvorrichtung (1; 100) für ein Gestänge (2) eines landwirtschaftlichen Geräts zum Streuen von Produkten, wobei die Vorrichtung Elemente zur Befestigung des Gestänges (2) an einem Gestell (1a; 101a) des Geräts und Mittel (7, 8; 107, 108, 115) zum Dämpfen gewisser Bewegungen des Gestänges (2) aufweist, wobei die Befestigungselemente zwei Verbindungsstangen (3, 4; 103, 104) umfassen, die jeweils an einem jeweiligen Gelenkpunkt (2a, 2b) an dem Gestänge (2) oder am Gestell (1a, 101a) angelenkt sind und deren Konvergenz die geometrische Positionierung des momentanen Drehzentrums (MDZ) des Gestänges (2) bestimmt,
***dadurch gekennzeichnet,* dass**
- die Aufhängungsvorrichtung (1; 100) des Weiteren Einstellelemente (7, 8; 107, 108) aufweist, die auf die Elemente zur Befestigung des Gestänges (2) einwirken können, um die Position des momentanen Drehzentrums (MDZ) des Gestänges (2) bezüglich dessen Schwerpunkts (SP) durch Änderung des Abstands zwischen dem Schwerpunkt (SP) und dem momentanen Drehzentrum (MDZ), das höher als der Schwerpunkt (SP) liegt, zu ändern,
- die Befestigungselemente des Weiteren zwei Kippvorrichtungen (5, 6; 105, 106) umfassen, die jeweils an einem jeweiligen Gelenkpunkt (5a, 6a) am Gestell (1a; 101a) oder am Gestänge (2) angelenkt sind, wobei eines der Enden jeder Kippvorrichtung (5, 6; 105, 106) an einem Gelenkpunkt (5b, 6b) an einer entsprechenden Verbindungsstange (3, 4; 103, 104) angelenkt ist, während das andere Ende jeder Kippvorrichtung (5, 6; 105, 106) mittels des entsprechenden Einstellelementes (7, 8; 107, 108) mit dem Gestell (1a; 101a) oder dem Gestänge (2) verbunden ist.

2. Aufhängungsvorrichtung nach Anspruch 1, ***dadurch gekennzeichnet,* dass** die Einstellelemente (7, 8; 107, 108) des Weiteren eine gegebene Winkelausrichtung des Gestänges (2) bezüglich des Gestells (1a; 101a) bewirken können, um zumindest im Wesentlichen die Parallelität des Gestänges (2) zu einem bezüglich der Horizontalen geneigten Boden (30) zu gewährleisten.

3. Aufhängungsvorrichtung nach Anspruch 1 oder 2, ***dadurch gekennzeichnet,* dass** die beiden Verbindungsstangen (3, 4; 103, 104) nach oben konvergieren.

4. Aufhängungsvorrichtung nach irgend einem der Ansprüche 1 bis 3, ***dadurch gekennzeichnet,* dass** jede Kippvorrichtung (5, 6; 105, 106) an einem jeweiligen im Wesentlichen zentralen Gelenkpunkt (5a, 6a) am Gestell (1a; 101a) oder am Gestänge (2) angelenkt ist.

5. Aufhängungsvorrichtung nach irgend einem der Ansprüche 1 bis 4, ***dadurch gekennzeichnet*, dass** jede Kippvorrichtung (5, 6; 105, 106) eine im Wesentlichen gekrümmte Form aufweist.

6. Aufhängungsvorrichtung nach irgend einem der Ansprüche 1 bis 5, ***dadurch gekennzeichnet,* dass** sie des Weiteren elastisch verformbare Mittel aufweist, deren Rückstellkraft eine Rückführung des Gestänges (2) in eine Normalstellung begünstigt.

7. Aufhängungsvorrichtung nach Anspruch 6, ***dadurch gekennzeichnet,* dass** die elastisch verformbaren Mittel durch die Einstellelemente (7, 8; 107, 108) gebildet werden.

8. Aufhängungsvorrichtung nach irgend einem der Ansprüche 1 bis 7, ***dadurch gekennzeichnet,* dass** die Mittel (7, 8; 107, 108, 115) zur Dämpfung der Bewegungen des Gestänges (2) zumindest teilweise durch die Einstellelemente (7, 8; 107, 108) gebildet werden.

9. Aufhängungsvorrichtung nach irgend einem der Ansprüche 1 bis 8, ***dadurch* *gekennzeichnet,* dass** jedes Einstellelement (7, 8; 107, 108) durch einen hydropneumatischen Zylinder gebildet wird.

10. Aufhängungsvorrichtung nach irgend einem der Ansprüche 1 bis 9, ***dadurch gekennzeichnet,* dass** die Mittel zur Dämpfung der Bewegungen des Gestänges (2) mindestens einen hydraulischen Dämpfer (115) umfassen, der zwischen dem Gestell (101a) und dem Gestänge (2) angebracht ist.

11. Aufhängungsvorrichtung nach Anspruch 10, ***dadurch gekennzeichnet,* dass** der hydraulische Dämpfer (115) zwischen dem eine der Verbindungsstangen (103, 104) mit dem Gestänge (2) oder dem Gestell (101a) verbindenden Gelenkpunkt (2a, 2b) und dem die entsprechende Kippvorrichtung (105, 106) mit dem Gestell (101a) oder dem Gestänge (2) verbindenden Gelenkpunkt (5a, 6a) angebracht ist.

12. Aufhängungsvorrichtung nach irgend einem der Ansprüche 1 bis 11, ***dadurch gekennzeichnet,* dass** sie des Weiteren Verriegelungsmechanismen (11, 12) aufweist, die die Verriegelung des Gestänges (2) in einer beliebigen Position gestatten.

13. Aufhängungsvorrichtung nach irgend einem der Ansprüche 1 bis 12, ***dadurch gekennzeichnet,* dass** sie des Weiteren Begrenzungsmechanismen aufweist, die die Verriegelung des Gestänges (2) in einer oberen Position gestatten.

14. Landwirtschaftliches Gerät zum Streuen von Produkten, das mit einem Gestell (1a; 101a), einem Gestänge (2) zum Streuen der Produkte und einer Aufhängungsvorrichtung (1; 100) zum Aufhängen des Streugestänges (2) am Gestell (1a, 101a) versehen ist, ***dadurch gekennzeichnet,* dass** die Aufhängungsvorrichtung (1; 100) eine Aufhängungs Vorrichtung nach irgend einem der Ansprüche 1 bis 13 ist.

## Claims

1. Suspension device (1; 100) for a boom (2) of a product-spreading agricultural appliance, the said device comprising elements for mounting the said boom (2) on a chassis (1a; 101a) of the said appliance and means (7, 8; 107, 108, 115) for damping certain movements of the boom (2), the mounting elements comprising two link rods (3, 4; 103, 104), each one articulated to the boom (2) or to the chassis (1a, 101a) at a respective point (2a, 2b) of articulation, and the convergence of which link rods determines the geometric location of the instantaneous centre of rotation (CIR) of the said boom (2),
***characterized in* that**:
- the said suspension device (1; 100) additionally comprises adjusting members (7, 8; 107, 108) capable of acting on the elements for mounting the said boom (2) so as to vary the position of the instantaneous centre of rotation (CIR) of the said boom (2) with respect to the centre of gravity (CG) thereof, by altering the separation between the said centre of gravity (CG) and the said instantaneous centre of rotation (CIR) which is located higher up than the said centre of gravity (CG),
- the mounting elements additionally comprise two rocker arms (5, 6; 105, 106), each one articulated to the chassis (1a; 101a) or to the boom (2) at a respective point (5a, 6a) of articulation, one of the ends of each rocker arm (5, 6; 105, 106) being articulated to the corresponding one of the link rods (3, 4; 103, 104) at a point (5b, 6b) of articulation, while the other end of each rocker arm (5, 6; 105, 106) is connected to the chassis (1a; 101a) or to the boom (2) via the corresponding adjusting member (7, 8; 107, 108).

2. Suspension device according to Claim 1, ***characterized in* that** the adjusting members (7, 8; 107, 108) are also capable of bringing the boom (2) into a given angular orientation with respect to the chassis (1a; 101a), and to do so in order to make sure that the said boom (2) is at least approximately parallel to a ground (30) that is inclined with respect to the horizontal.

3. Suspension device according to Claim 1 or 2, ***characterized in* that** the two link rods (3, 4 ; 103, 104) converge upwards.

4. Suspension device according to any one of Claims 1 to *3,* ***characterized in* that** each rocker arm (5, 6; 105, 106) is articulated to the chassis (1a; 101a) or to the boom (2) at an approximately central respective point (5a, 6a) of articulation.

5. Suspension device according to any one of Claims 1 to 4, ***characterized in* that** each rocker arm (5, 6; 105, 106) has a roughly cranked shape.

6. Suspension device according to any one of Claims 1 to 5, ***characterized in* that** it additionally comprises elastically deformable means, the return force of which encourages the boom (2) to return to a normal position.

7. Suspension device according to Claim 6, ***characterized in* that** the elastically deformable means consist of the adjusting members (7, 8; 107, 108).

8. Suspension device according to any one of Claims 1 to 7, ***characterized in* that** the means (7, 8; 107, 108, 115) for damping the movements of the boom (2) consist, at least in part, of the adjusting members (7, 8; 107, 108).

9. Suspension device according to any one of Claims 1 to *8,* ***characterized in* that** each adjusting member (7, 8; 107, 108) consists of an oleopneumatic ram.

10. Suspension device according to any one of Claims 1 to 9, ***characterized in* that** the means for damping the movements of the boom (2) comprise at least one hydraulic damper (115) mounted between the chassis (101a) and the boom (2).

11. Suspension device according to Claim 10, ***characterized in* that** the said hydraulic damper (115) is mounted between the point (2a, 2b) of articulation connecting one of the link rods (103, 104) to the boom (2) or to the chassis (101a) and the point (5a, 6a) of articulation connecting the corresponding rocker arm (105, 106) to the chassis (101a) or to the boom (2).

12. Suspension device according to any one of Claims 1 to 11, ***characterized in* that** it additionally comprises locking mechanisms (11, 12) allowing the boom (2) to be locked in any position.

13. Suspension device according to any one of Claims 1 to 12, ***characterized in* that** it additionally comprises limiting mechanisms which allow the boom (2) to be locked in a raised position.

14. Product-spreading agricultural appliance equipped with a chassis (1a; 101a), a boom (2) for spreading the said products and a suspension device (1; 100) for suspending the said spreading boom (2) on the said chassis (1a; 101a), ***characterized in* that** the said suspension device (1; 100) is a suspension device according to any one of Claims 1 to 13.
